**Europäisches Patentamt**

**European Patent Office**

**Office européen des brevets**

(11) Numéro de publication : **0 072 337
B1**

(12)

# FASCICULE DE BREVET EUROPÉEN

(45) Date de publication du fascicule du brevet :
18.09.85

(51) Int. Cl.⁴ : **A 47 J 39/02, A 47 G 23/04**

(21) Numéro de dépôt : **82440023.8**

(22) Date de dépôt : **23.07.82**

(54) **Plateau chauffant.**

(30) Priorité : **03.08.81 FR 8115314**

(43) Date de publication de la demande :
**16.02.83 Bulletin 83/07**

(45) Mention de la délivrance du brevet :
**18.09.85 Bulletin 85/38**

(84) Etats contractants désignés :
**AT BE CH DE GB IT LI LU NL SE**

(56) Documents cités :
**DE-A- 1 654 996
DE-A- 2 039 459
FR-A- 2 349 112
FR-A- 2 387 010
FR-A- 2 410 461
GB-A- 1 167 925
US-A- 2 625 242
US-A- 3 019 783
US-A- 3 746 837
US-A- 3 908 749
US-A- 4 182 405**

(73) Titulaire : **R. FRITSCH S.A. Société Anonyme dite:
4, rue de la Charente
F-68270 Wittenheim (FR)**

(72) Inventeur : **Fritsch, Edgar
14, rue des Anémones Richwiller
F-68120 Pfastatt (FR)**
Inventeur : **Fritsch, Norbert
10, rue de la Rivière
F-68390 Sausheim (FR)**

(74) Mandataire : **Aubertin, François
Cabinet Lepage & Aubertin Innovations et Prestations 4, rue de Haguenau
F-67000 Strasbourg (FR)**

Jouve, 18, rue St-Denis, 75001 Paris, France

## Description

L'invention concerne un plateau chauffant comportant une plaque de diffusion de chaleur recouverte d'une matière moulée formant une coquille supérieure et une coquille inférieure, ces deux coquilles étant assemblées par une mousse isolante injectée, la plaque étant pourvue d'une résistance électrique sur laquelle on dispose un récipient à régénérer contenant des aliments chauds recouverts d'une cloche-couvercle.

Dans les hôpitaux, on utilise plusieurs procédés d'acheminement des aliments en provenance d'une cuisine collective et distribués auprès de leur lieu d'utilisation et, notamment, auprès des malades.

Selon un premier procédé, les aliments cuisinés sont transportés dans des containers maintenant les aliments au chaud et le personnel prévu à cet effet transvase ces aliments dans les plateaux distribués aux malades.

Selon un second procédé, les aliments cuisinés dans une cuisine collective sont acheminés vers des cuisines auxiliaires des différents services et le personnel de ces cuisines régénère les aliments avant leur distribution auprès des malades.

Or, ces différents procédés présentent plusieurs inconvénients. En effet, il arrive fréquemment que les malades soient soumis à un régime alimentaire particulier et que dans un même service se trouvent des malades dont chacun a un autre régime à suivre. De ce fait, il s'avère nécessaire de prévoir dans chaque cuisine de service une diététicienne qui, soit, prépare le repas de régime dans la cuisine de service, soit vérifie que le plateau contient bien le repas de régime destiné à un malade déterminé. Ainsi, le nombre de diététiciennes dans un hôpital est parfois très important. Par ailleurs, ce personnel spécialisé est fréquemment soumis à de nombreuses difficultés dues, d'une part, à la variation constante des malades et, d'autre part, aux moyens insuffisants mis à sa disposition dans une cuisine de service, notamment lorsque dans le service se trouvent plusieurs malades soumis à des régimes différents.

Pour pallier à ces inconvénients, certains hôpitaux prévoient une diététicienne dans la cuisine collective. Toutefois, il est nécessaire de prévoir des possibilités pour séparer les différents régimes et on risque une interversion des régimes lors de la distribution, ce qui peut entraîner de graves complications.

De plus, il arrive fréquemment que le malade soit absent pour une raison ou pour une autre et que le repas refroidisse sur le plateau. S'il n'existe pas de cuisine de service, le repas ne peut être réchauffé et le malade est obligé de manger le repas refroidi.

Pour pallier à ces inconvénients on a conçu des plateaux-chauffants. Ainsi on connaît par le document US-A-3 908 749 un plateau chauffant comportant une plaque de diffusion de chaleur recouverte d'une matière coulée. La plaque comporte une résistance électrique sur laquelle on dispose un récipient à régénérer contenant des aliments chauds recouverts d'une cloche-couvercle. Cependant du fait que la plaque de diffusion de chaleur est recouverte d'une matière coulée, il y a forcément une perdition de chaleur puisque cette dernière doit traverser cette matière coulée avant de rechauffer.

La présente invention a pour but de remédier à ces inconvénients. L'invention, telle qu'elle est caractérisée dans les revendications résout le problème consistant à créer un plateau chauffant dont la plaque de diffusion de chaleur est directement en contact avec le récipient à régénérer ce qui permet de maintenir les aliments chauds depuis la cuisine collective jusqu'au lieu de distribution voire jusqu'au moment de la consommation du repas.

Les avantages obtenus grâce à cette invention consistent essentiellement en ceci que la diététicienne peut, dans la cuisine collective, surveiller que le plateau comporte bien le repas de régime déterminé et pratiquement on élimine toute interversion puisque le repas de régime destiné à un malade déterminé reste sur le même plateau depuis la vérification faite dans la cuisine collective jusqu'à sa destination.

Un autre avantage de l'invention réside dans le fait que le repas peut être maintenu chaud jusqu'au retour du malade.

L'invention est exposée ci-après plus en détail à l'aide des dessins représentant seulement un mode d'exécution.

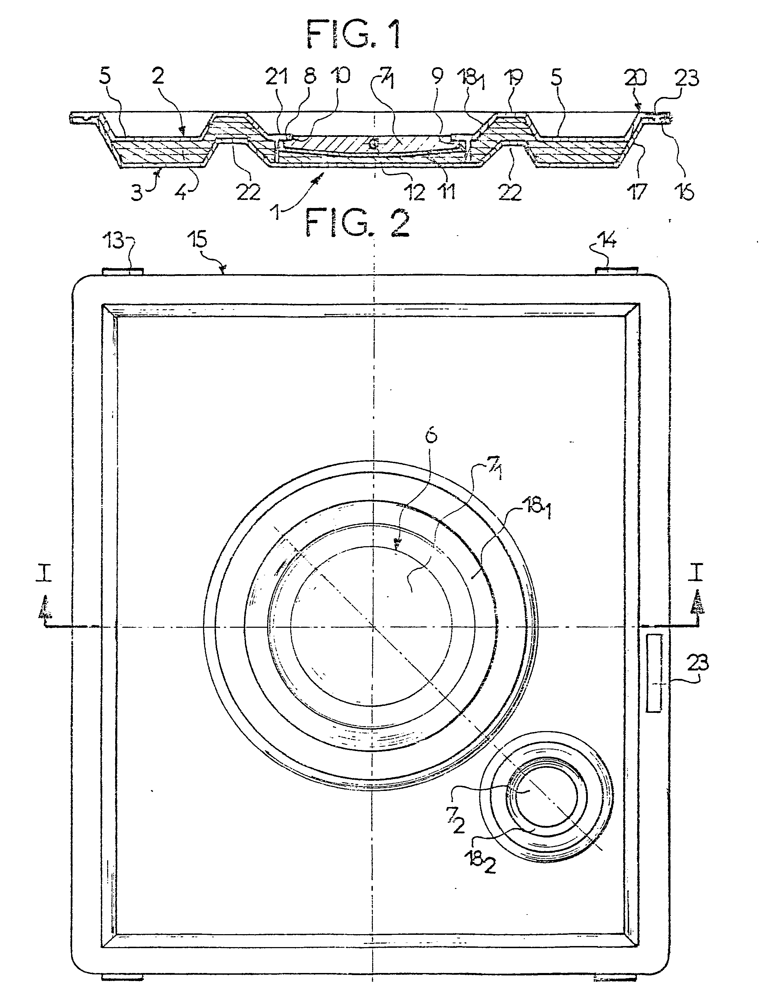

La figure 1 représente, en vue en coupe selon la ligne de coupe I-I de la figure 2, un plateau chauffant conforme à l'invention.

La figure 2 représente, en vue en plan, le plateau chauffant conforme à l'invention.

On se réfère aux deux figures.

Le plateau chauffant 1 comporte deux coquilles moulées 2 et 3, l'un 2 étant la coquille supérieure et l'autre 3 la coquille inférieure. Ces deux coquilles 2, 3 sont assemblées par une mousse isolante injectée 4 et, notamment par une mousse isolante en polyuréthane.

Dans le dessus 5 de la coquille supérieure 2, on prévoit au moins un évidement 6 de forme quelconque mais de préférence circulaire. Cet évidement 6 sert de passage à une plaque de diffusion de chaleur $7_1$. Celle-ci présente un épaulement 8 venant buter contre la face inférieure 9 du pourtour 10 de l'évidement 6. Cette plaque de diffusion de chaleur 7 est maintenue en place par un fond 11 épousant la partie inférieure de ladite plaque et prenant également appui contre la face inférieure 9. Ce fond 11 forme écran isolant entre la plaque de diffusion de chaleur $7_1$ et la mousse isolante 4 injectée entre la coquille supérieure 2 et la coquille inférieure 3, cette mousse maintenant appliqué le fond 11 contre ladite face inférieure 9. La plaque de diffusion de chaleur $7_1$ comporte une résistance électrique 12.

Selon un premier mode de réalisation, cette résistance électrique 12 est reliée à des contacts électriques 13, 14 faisant légèrement saillie par rapport au chant 15 d'un bord périphérique 16 réalisé en relief par rapport au dessus 5 de la coquille supérieure 2.

Selon un autre mode de réalisation, cette résistance électrique 12 est reliée à une fiche mâle noyée dans la paroi verticale 17 du plateau chauffant 1. Ainsi, à l'aide d'un simple cordon électrique, il est possible de brancher le plateau chauffant 1 à une des prises électriques de la chambre du malade. De ce fait, lorsque pour une raison ou pour une autre, le malade est absent lors de la distribution du repas, par suite de ce branchement individuel, il sera possible de maintenir le repas chaud jusqu'à son retour.

L'évidement 6 est entouré d'un bossage périphérique $18_1$ dont le dessus 19 se trouve dans un même plan horizontal que le dessus 20 du bord périphérique 16. Ainsi, on obtient une cuvette 21 dans laquelle il est possible de placer le récipient tel qu'une assiette à régénérer emmagasinant la chaleur dégagée par la plaque de diffusion de chaleur $7_1$. Le dessus 19 de ce bossage sert d'assise à la cloche-couvercle (non représentée mais utilisée couramment). Avantageusement, cette cloche-couvercle est en acier inoxydable, donc en un matériau relativement bon conducteur de la chaleur. Ladite cloche-couvercle, toujours plus chaude que les aliments, rend impossible la condensation et aussi l'évaporation des substances volatiles. Seule la poche d'air emprisonnée avec les aliments restitue à ceux-ci la température de consommation.

Dans certains hôpitaux, on sert le potage dans un bol. A cet effet, le plateau chauffant 1 comporte une seconde plaque de diffusion de chaleur $7_2$ entourée également d'un bossage périphérique $18_2$.

La coquille inférieure 3 comporte, soit un, soit deux creux périphériques 22 dont la forme, la section et l'emplacement sont identiques à ceux des bossages périphériques $18_1$ et $18_2$. De ce fait, il est possible d'empiler les plateaux chauffants 1 les uns au-dessus des autres.

Du fait que les deux coquilles 2, 3 sont obtenues par moulage, on peut leur conférer la forme et la couleur désirées. Il en est de même en ce qui concerne la forme des bossages $18_1$ et $18_2$ et des creux 22. Ainsi, il est possible de prévoir, de part et d'autre des bossages $18_1$, $18_2$ différents compartiments, soit pour des aliments froids tels que salade, fromage, dessert et autres, soit pour d'autres objets tels que couvert, verre, etc..... On peut également prévoir sur le dessus 20 du bord périphérique 16 un emplacement 23 pour un marquage permettant l'identification de la destination du plateau chauffant 1.

## Revendications

1. Plateau chauffant comportant une plaque de diffusion de chaleur ($7_1$, $7_2$) recouverte d'une matière moulée formant une coquille supérieure (2) et une coquille inférieure (3), ces deux coquilles (2, 3) étant assemblées par une mousse isolante injectée (4), la plaque ($7_1$, $7_2$) étant pourvue d'une résistance électrique (12) sur laquelle on dispose un récipient à régénérer contenant les aliments chauds recouverts d'une cloche couvercle caractérisé en ce que la coquille moulée supérieure (2) comporte au moins un évidement (6) servant de passage à la plaque de diffusion de chaleur ($7_1$, $7_2$) présentant un épaulement (8) venant buter contre la face inférieure (9) du pourtour (10) de cet évidement (6) et au moins un bossage périphérique ($18_1$, $18_2$) entourant l'évidement (6) permettant d'obtenir une cuvette (21) dans laquelle est placé le récipient contenant l'aliment chaud.

2. Plateau chauffant selon la revendication 1, caractérisé en ce qu'il comporte un fond (11) épousant la partie inférieure de la plaque de diffusion de chaleur ($7_1$, $7_2$) et formant écran isolant entre la plaque de diffusion de chaleur ($7_1$, $7_2$) et la mousse isolante injectée (4).

3. Plateau chauffant selon les revendications 1 et 2, caractérisé en ce que la résistance électrique (12) est reliée à des contacts électriques (13, 14) faisant légèrement saillie par rapport au chant (15) du bord périphérique (16) du plateau chauffant (1), ce bord étant en relief par rapport au dessus (5) de la coquille supérieure (2).

4. Plateau chauffant selon les revendications 1 et 2, caractérisé en ce que la résistance électrique (12) est reliée à une fiche mâle noyée dans la paroi verticale (17) du plateau chauffant (1).

5. Plateau chauffant selon les revendications 1 et 3, caractérisé en ce que le dessus (19) du bossage périphérique ($18_1$, $18_2$) est situé dans un même plan horizontal que le dessus (20) du bord périphérique (16).

6. Plateau chauffant selon la revendication 1, caractérisé en ce que la coquille inférieure (3) comporte au moins un creux périphérique (22) dont la forme, la section et l'emplacement sont identiques à ceux des bossages périphériques ($18_1$, $18_2$) pour l'empilage des plateaux chauffants (1).

7. Plateau chauffant selon la revendication 1, caractérisé en ce qu'il comporte différents compartiments répartis autour des bossages ($18_1$, $18_2$).

8. Plateau chauffant selon les revendications 1 et 3, caractérisé en ce que le dessus (20) du bord périphérique (16) comporte un emplacement (23) pour un marquage permettant l'identification de la destination du plateau chauffant (1).

## Claims

1. Heated serving tray comprising a hotplate ($7_1$, $7_2$) coated with a moulded material forming an upper shell (2) and a lower shell (3), these two shells (2, 3) being assembled by means of an extruded insulating foam (4), the hotplate ($7_1$, $7_2$) being fitted with an electrical resistance (12) on which is placed a regenerative vessel containing the hot food, covered with a domed dish-cover, characterised by the fact that the upper moulded shell (2) comprises at least one cavity (6) serving as a channel for the hotplate ($7_1$, $7_2$) and having a shoulder which comes to rest on the lower surface (9) of the rim (10) of that cavity (6), and at least one peripheral boss ($18_1$, $18_2$) surrounding the cavity (6), thus making a bowl (21) in which the vessel containing the hot food is placed.

2. Heated serving tray in accordance with Claim 1, characterised by the fact that it comprises a base (11) having the exact shape of the lower part of the hotplate ($7_1$, $7_2$) and forming an insulating screen between the hotplate ($7_1$, $7_2$) and the extruded insulating foam (4).

3. Heated serving tray in accordance with Claims 1 and 2, characterised by the fact that the electrical resistance (12) is connected to electrical contacts (13, 14) which project slightly from the edge (15) of the peripheral rim (16) of the heated serving tray (1), this rim standing out in relief from the top side (5) of the upper shell (2).

4. Heated serving tray in accordance with Claims 1 and 2, characterised by the fact that the electrical resistance (12) is connected to a male plug sunk into the vertical side (17) of the heated serving tray (1).

5. Heated serving tray in accordance with Claims 1 and 3, characterised by the fact that the upper side (19) of the peripheral boss ($18_1$, $18_2$) is set on the same horizontal plane as the upper side (20) of the peripheral rim (16).

6. Heated serving tray in accordance with Claim 1, characterised by the fact that the lower shell (3) comprises as least one peripheral hollow (22), the shape, cross-section and positioning of which are identical to those of the peripheral bosses ($18_1$, $18_2$) thus enabling the heated serving trays (1) to be stacked in a pile.

7. Heated serving tray in accordance with Claim 1, characterised by the fact that it comprises various compartments arranged around the bosses ($18_1$, $18_2$).

8. Heated serving tray in accordance with Claims 1 and 3, characterised by the fact that the upper side (20) of the peripheral rim (16) comprises a space (23) for marking the name of the person or place to which the heated serving tray (1) is to be carried.

**Patentansprüche**

1. Tablett mit Wärmevorrichtung oder Heizplatte mit einer Thermodiffusionsplatte ($7_1$, $7_2$), die von einer Preßmasse abgedeckt ist, welche eine obere und eine untere Schale (2 bzw. 3) bildet, die beide (2, 3) mit eingespritztem Isolierschaumstoff (4) zusammengefügt sind, wobei die Platte ($7_1$, $7_2$) mit einem elektrischen Widerstand versehen ist, auf die ein wiederaufzuwärmenden Behältnis gesetzt oder gestellt wird, das die mit einer Abdeckglocke bedeckten warmen Speisen enthält, dadurch gekennzeichnet, daß die obere Schale (2) zumindest eine Ausnehmung (6) aufweist, die der Thermodiffusionsplatte ($7_1$, $7_2$) als Durchgang dient und einen Vorsprung (8), der auf die Innenfläche (9) des äußeren Umfangs (10) der Ausnehmung (6) trifft, und zumindest einen peripheren Buckel oder Wulst ($18_1$, $18_2$) bildet, der die Ausnehmung (6) umgibt, so daß sich ein Becken (21) ergibt, in den das die warme Speise enthaltende Behältnis gegeben wird.

2. Tablett mit Wärmevorrichtung nach Anspruch 1, dadurch gekennzeichnet, daß es einen sich dem unteren Teil der Thermodiffusionsplatte ($7_1$, $7_2$) anschmiegenden Boden (11) aufweist und zwischen der Thermodiffusionsplatte ($7_1$, $7_2$) und dem eingespritzten Isolierschaumstoff (4) einen Isoliergürtel oder -schirm bildet.

3. Tablett mit Wärmevorrichtung nach den Ansprüchen 1 und 2, dadurch gekennzeichnet, daß der elektrische Widerstand (12) an elektrischen Kontakten (13, 14) liegt, der gegenüber der Kante (15) des peripheren Rands (16) des Tabletts mit Wärmevorrichtung (1) leicht hervorspringt, wobei der Rand gegenüber dem oberen Teil (5) der oberen Schale (2) erhaben ist.

4. Tablett mit Wärmevorrichtung nach den Ansprüchen 1 und 2, dadurch gekennzeichnet, daß der elektrische Widerstand an einem in der senkrechten Wand (17) des Tabletts mit Wärmevorrichtung (1) versenktem Steckerteil liegt.

5. Tablett mit Wärmevorrichtung nach den Ansprüchen 1 und 3, dadurch gekennzeichnet, daß das Oberteil (19) des peripheren Buckels ($18_1$, $18_2$) auf ein und derselben horizontalen Ebene wie das Oberteil (20) des peripheren Randes (16) liegt.

6. Tablett mit Wärmevorrichtung nach Anspruch 1, dadurch gekennzeichnet, daß die untere Schale (3) zumindest eine periperische Aushöhlung (22) aufweist, deren Gestalt, Querschnitt und Standort identisch sind mit den peripheren Buckeln ($18_1$, $18_2$) für die lagenweise Anordnung der Tabletts mit Wärmevorrichtung (1).

7. Tablett mit Wärmevorrichtung nach Anspruch 1, dadurch gekennzeichnet, daß es verschiedene um die Buckel ($18_1$, $18_2$) angeordnete Fächer oder Abteilungen aufweist.

8. Tablett mit Wärmevorrichtung nach den Ansprüchen 1 und 3, dadurch gekennzeichnet, daß das Oberteil (20) der peripheren Kante (16) einen für eine Markierung bestimmten Standort (23) aufweist, durch den der Einsatzort des Tabletts mit Wärmevorrichtung (1) zu erkennen ist.

# FIG. 1

# FIG. 2